# EUROPEAN PATENT APPLICATION

(11) **EP 2 851 764 A1**
(43) Date of publication of application: **25.03.2015**
(21) Application number: 12878221.6
(22) Date of filing: 30.07.2012
(51) Int. Cl.: G06F 3/033, G06Q 20/32

(54) **STYLUS, MOBILE TERMINAL AND INFORMATION PROCESSING METHOD**

(30) Priority: 08.06.2012 CN 201210188542
(71) Applicant: ZTE Corporation, Shenzhen, Guangdong 518057 (CN)
(72) Inventor: LIU, Tingting, Shenzhen Guangdong 518057 (CN)
(74) Representative: Price, Nigel John King
(86) International application number: PCT/CN2012/079371
(87) International publication number: WO 2013/181882

(57) **Abstract**

A stylus, a mobile terminal and an information processing method is described. The stylus includes a Near Field Communication (NFC) reading module, a sending module and an interface module, wherein the NFC reading module is for acquiring information of a smart card using an NFC technology, the sending module is for sending the information, which is acquired by the NFC reading module, of the smart card to a terminal of a merchant through the interface module, and the interface module is for performing information transmission with the terminal of the merchant. A conventional merchant terminal is not needed to be obsoleted by a merchant, and can support transaction based on NFC technology only by adding a piece of processing equipment (the stylus), so that cost is saved.

## Description

### TECHNICAL FIELD

The disclosure relates to the field of mobile payment, and in particular to a stylus, a mobile terminal and an information processing method.

### BACKGROUND

Compared with a conventional close communication technology, a Near Field Communication (NFC) technology not only can rapidly establish a data connection, but also has higher data transmission security. Along with the maturation of the NFC technology, the NFC technology is gradually applied to the field of mobile payment.

However, a conventional merchant terminal adopted by a merchant usually does not support payment using the NFC technology, and needs to be replaced by a merchant terminal supporting payment using the NFC technology if the NFC technology is needed for payment. The replacement cost is very high.

### SUMMARY

The embodiments of the disclosure are to provide a stylus, a mobile terminal and an information processing method, so that a merchant can adopt the NFC technology for transaction processing only by adding a piece of processing equipment to a conventional merchant terminal, without obsoleting the conventional merchant terminal, and thus cost can be saved.

In order to solve the technical problem, the embodiment of the disclosure provides the following technical solution.

On one aspect, a stylus is provided, which includes an NFC reading module, a sending module and an interface module, wherein
the NFC reading module is configured to acquire information of a smart card using an NFC technology;
the sending module is configured to send the information, which is acquired by the NFC reading module, of the smart card to a terminal of a merchant through the interface module; and
the interface module is configured to perform information transmission with the terminal of the merchant.

Preferably, the NFC reading module is specifically configured to acquire the information of the smart card from the smart card using the NFC technology, or to acquire the information of the smart card from a terminal of a user using the NFC technology.

Preferably, the stylus further includes an input module, which inputs a handwritten signature of a user into the terminal of the merchant after receiving a response from the terminal of the merchant.

Preferably, the interface module is a Universal Serial Bus (USB) interface module or a Bluetooth module.

On another aspect, a mobile terminal is provided, which includes the abovementioned stylus.

On still another aspect, an information processing method is provided, which includes that:
a stylus acquires information of a smart card using an NFC technology; and
the stylus sends the information of the smart card to a terminal of a merchant.

Preferably, the step that the stylus acquires the information of the smart card using the NFC technology includes that the stylus acquires the information of the smart card from the smart card using the NFC technology;
or that the stylus acquires the information of the smart card from a terminal of a user using the NFC technology.

Preferably, after the stylus sends the information of the smart card to the terminal of the merchant, the method further includes that:
the stylus inputs a handwritten signature of a user into the terminal of the merchant after receiving a response from the terminal of the merchant.

Preferably, the step that the stylus inputs the handwritten signature of the user into the terminal of the merchant includes that:
the stylus inputs the handwritten signature of the user on a touch screen or a tablet of the terminal of the merchant according to operation of the user; or that
the stylus acquires the handwritten signature of the user from the terminal of the user using the NFC technology, and sends the handwritten signature of the user to the terminal of the merchant.

Preferably, after the handwritten signature of the user is input into the terminal of the merchant, the method further includes that:
the terminal of the merchant sends the handwritten signature of the user to a server so that the server can perform handwriting authentication; and
after the handwriting authentication succeeds, the server respectively processes an account balance of the smart card and an account balance of a merchant, which are stored in the server, according to transaction amount and transaction mode information sent from the terminal of the merchant,.

The embodiment of the disclosure has beneficial effects as follows:
in the technical solution, the stylus acquires the information of the smart card using the NFC technology; and the stylus sends the information of the smart card to the terminal of the merchant, so that the terminal of the merchant can send the information of the smart card to the server for verification. A merchant can adopt the NFC technology for transaction processing only by adding a piece of processing equipment to a conventional merchant terminal, without obsoleting the conventional merchant terminal; in this way, cost can be saved.

### BRIEF DESCRIPTION OF THE DRAWINGS

Fig. 1 is a connection diagram of a stylus of the disclosure;
Fig. 2 is a structure diagram of a stylus of the disclosure;
Fig. 3 is a connection diagram of a transaction processing system of the disclosure;
Fig. 4 is a flowchart of a first embodiment of an information processing method of the disclosure;
Fig. 5 is a flowchart of a second embodiment of an information processing method of the disclosure;
Fig. 6 is a flowchart of a third embodiment of an information processing method of the disclosure; and
Fig. 7 is a flowchart of a processing process after a terminal of a merchant receives information of a credit card from a stylus in an application scenario of the disclosure.

### DETAILED DESCRIPTION

In order to make the technical problem to be solved, the technical solution and advantages of the embodiment of the disclosure clearer, detailed description is given below with reference to the drawings and specific embodiments.

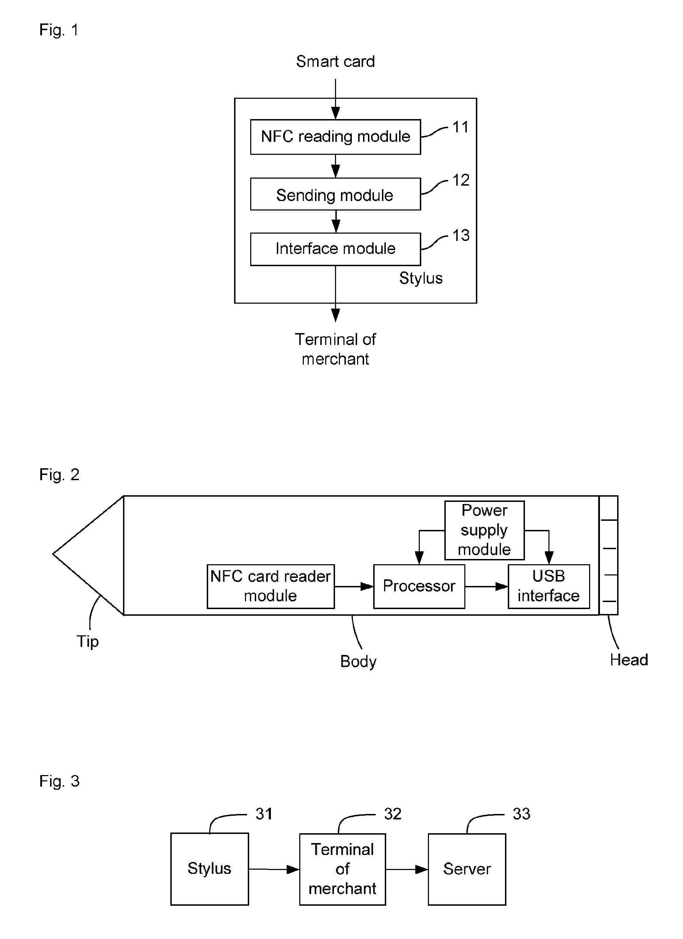

As shown in Fig. 1, a stylus of the disclosure includes an NFC reading module 11, a sending module 12 and an interface module 13, wherein
the NFC reading module 11 acquires information of a smart card using an NFC technology;
the sending module 12 sends the information of the smart card, which is acquired by the NFC reading module 11, to a terminal of a merchant through the interface module 13;
the interface module 13 performs information transmission with the terminal of the merchant; and
the interface module 13 may be a USB interface module or a Bluetooth module. The stylus may be coupled with the terminal of the merchant through a USB interface, so that security is higher; and the stylus may also be coupled with the terminal of the merchant in another manner such as through Bluetooth.

The interface module 13 therein may be integrated in a head of the stylus. The NFC reading module 11 and the sending module 12 may be integrated in a body of the stylus. Certainly, another mechanical assembling manner may also be adopted.

Specifically, the NFC reading module 11 acquires the information of the smart card from the smart card using the NFC technology; and correspondingly, the smart card supports the NFC technology;
or, the NFC reading module 11 acquires the information of the smart card from a terminal of a user using the NFC technology. Correspondingly, the terminal of the user supports the NFC technology, and pre-stores the information of the smart card.

The stylus further includes an input module 14, which inputs a handwritten signature of a user to the terminal of the merchant after receiving a response from the terminal of the merchant.

Specifically, the input module 14 inputs the handwritten signature of the user on a touch screen or a tablet of the terminal of the merchant according to operation of the user, thereby inputting the handwritten signature of the user to the terminal of the merchant. In the embodiment, the terminal of the merchant is provided with a touch screen or a tablet.

Or, the input module 14 receives the handwritten signature of the user from the terminal of the user using the NFC technology, and transmits the handwritten signature of the user to the terminal of the merchant. In the embodiment, the terminal of the user supports the NFC technology, and pre-stores the handwritten signature of the user.

An application scenario of the stylus of the disclosure is described below. A stylus with an NFC function is described, and a user can finish payment, settlement or bill signing using the NFC stylus.

As shown in Fig. 2, the stylus is divided into three parts, i.e. a tip, a body and a head. A processor, an NFC card reader module, a USB interface and a power supply module are additionally arranged in the body, wherein the body is integrated with the NFC card reader module which is equivalent to the NFC reading module 11; the processor is equivalent to the sending module 12; and the head is integrated with the USB interface which is equivalent to the interface module 13.

The NFC card reader module therein is configured to read an NFC terminal or an NFC smart card of a client to acquire information of the smart card and transmit the information to the processor for processing.

The processor is configured to be coupled with an NFC card reader and forward received transaction information to the USB interface.

The USB interface is configured to transmit from the USB interface the transaction information acquired from the processor to the coupled merchant terminal.

The power supply module is configured to supply power to the processor and the USB interface.

The NFC card reader for reading data is arranged in the body of the stylus of the disclosure, and is matched with a conventional terminal (which may be a mobile phone or a tablet personal computer) of the merchant to realize a function of submitting the data to a bank to finish a transaction. The merchant is not required to replace the conventional terminal (but an application program of the terminal is required to be updated), the stylus is additionally arranged, and meanwhile, the stylus can be carried conveniently.

As shown in Fig. 3, an information processing system includes a stylus 31, a terminal of a merchant 32 and a server 33;
the stylus 31 acquires information of a smart card using an NFC technology, and transmits the information of the smart card to the terminal of the merchant;
the terminal of the merchant 32 sends the information of the smart card and information of the merchant to the server; and
the server 33 performs information authentication on the information of the smart card and the information of the merchant.

An application scenario of the information processing system of the disclosure is described below.

The stylus is configured to be powered by a USB interface and transmit data to the terminal of the merchant.

The terminal of the merchant (which may be a mobile phone or a tablet personal computer) performs corresponding processing, and in order to support a transaction, the terminal of the merchant specifically:
1. establishes a secure connection with a bank server, and submits transaction data to the bank server for verification;
2. displays a transaction detail record, and waits for the signing of a client with the stylus; and
3. may include a touch screen or a tablet, and after the client signs, submits the handwriting of the client to the bank server.

The bank server is configured to perform security check.

A mobile terminal is also provided, which includes the above-mentioned stylus.

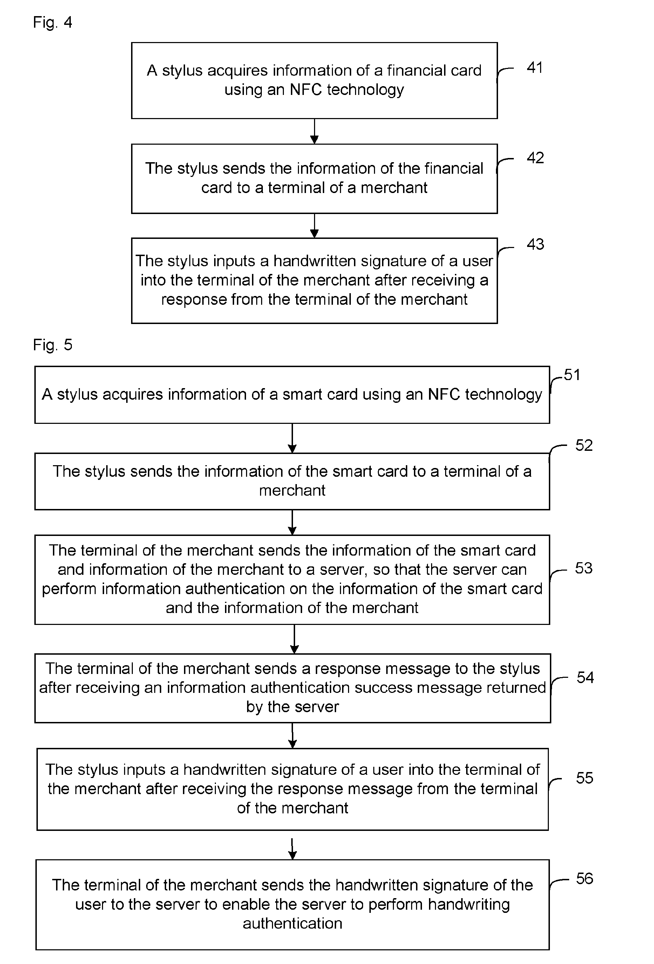

As shown in Fig. 4, a first embodiment of an information processing method of the disclosure includes that:
Step 41: a stylus acquires information of a smart card using an NFC technology; and
Step 42: the stylus sends the information of the smart card to a terminal of a merchant. In this step, the stylus may be coupled with the terminal of the merchant through a USB interface, so that higher security is acquired; and the stylus may also be coupled with the terminal of the merchant in another manner such as through Bluetooth.

Step 41 specifically includes that the stylus acquires the information of the smart card from the smart card using the NFC technology; and correspondingly, the smart card supports the NFC technology;
or, Step 41 specifically includes that the stylus acquires the information of the smart card from a terminal of a user using the NFC technology. Correspondingly, the terminal of the user supports the NFC technology, and pre-stores the information of the smart card.

Optionally, after Step 42, the method further includes:
Step 43: the stylus inputs a handwritten signature of a user into the terminal of the merchant after receiving a response from the terminal of the merchant;
Step 43 specifically includes that the stylus inputs the handwritten signature of the user on a touch screen or a tablet of the terminal of the merchant according to operation of the user, thereby inputting the handwritten signature of the user into the terminal of the merchant. In the embodiment, the terminal of the merchant is provided with a touch screen or a tablet;
or, Step 43 specifically includes that the stylus receives the handwritten signature of the user from the terminal of the user using the NFC technology, and sends the handwritten signature of the user to the terminal of the merchant. In the embodiment, the terminal of the user supports the NFC technology, and pre-stores the handwritten signature of the user.

As shown in Fig. 5, a second embodiment of an information processing method of the disclosure includes:
Step 51: a stylus acquires information of a smart card using an NFC technology;
Step 52: the stylus sends the information of the smart card to a terminal of a merchant. In this step, the stylus can be coupled with the terminal of the merchant through a USB interface, so that higher security is acquired; and the stylus can also be coupled with the terminal of the merchant in another manner such as through Bluetooth;
Step 53: the terminal of the merchant sends the information of the smart card and information of the merchant to a server, and the server performs information authentication on the information of the smart card and the information of the merchant;
Step 54: the terminal of the merchant sends a response message to the stylus after receiving an information authentication success message returned by the server;
Step 55: the stylus inputs a handwritten signature of a user into the terminal of the merchant after receiving a response message from the terminal of the merchant; and
Step 56: the terminal of the merchant sends the handwritten signature of the user to the server, and the server performs handwriting authentication; and after the handwriting authentication succeeds, the server processes an account balance of the smart card and an account balance of the merchant respectively, which are stored in the server, according to transaction amount and transaction mode information received from the terminal of the merchant. Specifically, if a transaction mode is consumption, then the transaction amount is subtracted from the account balance of the smart card, and is added to the account balance of the merchant; and if the transaction mode is refunding, then the transaction amount is added to the account balance of the smart card, and is subtracted from the account balance of the merchant.

In the embodiment, the method further includes a step that the terminal of the merchant transmits the transaction amount and transaction mode information to the server. The step may be executed after the terminal of the merchant receives the information authentication success message returned by the server; or the step may also be executed after the handwriting authentication by the server succeeds.

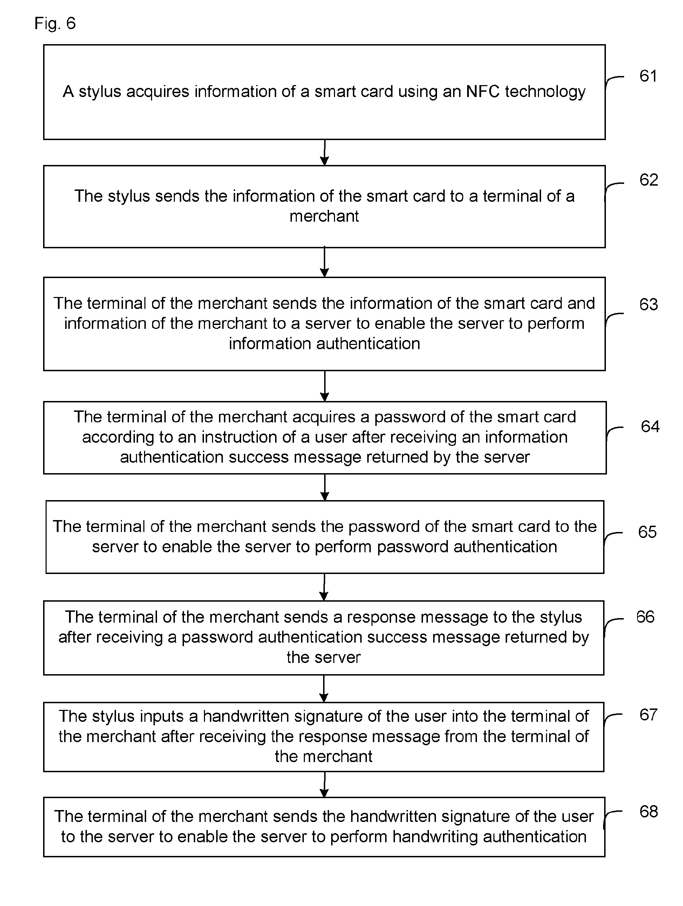

As shown in Fig. 6, a third embodiment of an information processing method of the disclosure includes:
Step 61: a stylus acquires information of a smart card using an NFC technology;
Step 62: the stylus sends the information of the smart card to a terminal of a merchant. In this step, the stylus may be coupled with the terminal of the merchant through a USB interface, so that higher security is acquired; the stylus may also be coupled with the terminal of the merchant in another manner such as through Bluetooth;
Step 63: the terminal of the merchant sends the information of the smart card and information of the merchant to a server, and the server performs information authentication;
Step 64: the terminal of the merchant acquires a password of the smart card according to an instruction of a user after receiving an information authentication success message returned by the server;
Step 65: the terminal of the merchant sends the password of the smart card to the server, and the server performs password authentication;
Step 66: the terminal of the merchant sends a response message to the stylus after receiving a password authentication success message returned by the server;
Step 67: the stylus inputs a handwritten signature of the user into the terminal of the merchant after receiving a response message from the terminal of the merchant; and
Step68: the terminal of the merchant sends the handwritten signature of the user to the server, and the server performs handwriting authentication; and after the handwriting authentication succeeds, the server processes respectively an account balance of the smart card and an account balance of a merchant, which are stored in the server, according to transaction amount and transaction mode information received from the terminal of the merchant.

In the embodiment, the method further includes a step that the terminal of the merchant sends the transaction amount and transaction mode information to the server. This step may be executed after the terminal of the merchant receives the information authentication success message returned by the server; the step may also be executed after the handwriting authentication by the server succeeds; or the step may also be executed after the password authentication by the server succeeds.

The smart card of the disclosure includes, but not limited to, a financial card, a rechargeable card of a supermarket, a public transportation card and the like.

An application scenario of the disclosure is described below. In the application scenario, the smart card is a credit card, and the server is a bank server. The method includes that:
first, a USB interface of the stylus is coupled with a USB interface of the terminal of the merchant (another coupling manner such as Bluetooth may also be used);
then, the stylus scans the NFC terminal (for example, a mobile phone or a tablet personal computer) of the client or an NFC credit card, the NFC card reader in the stylus reads information, which is stored in the NFC terminal of the client, of the credit card, or the NFC card reader in the stylus acquires the information of the credit card by reading the NFC credit card;
then, the stylus sends the information to the terminal of the merchant using the USB interface (other transmission manners may also be adopted);
then, the terminal of the merchant sends the information of the merchant and the information of the credit card to the bank server (in a wireless manner or a wired manner) for information authentication;
then, after data is determined to be legal by the information authentication, the terminal of the merchant acquires the password, which is input by the user, of the credit card, and transmits the password of the credit card to the bank server for verification;
then, after data is determined to be legal by the password verification, the terminal of the merchant acquires a bill signed by the user with the stylus on the touch screen or tablet of the terminal of the merchant; and
then, the terminal of the merchant sends the handwritten signature of the user to the bank server for handwriting verification.

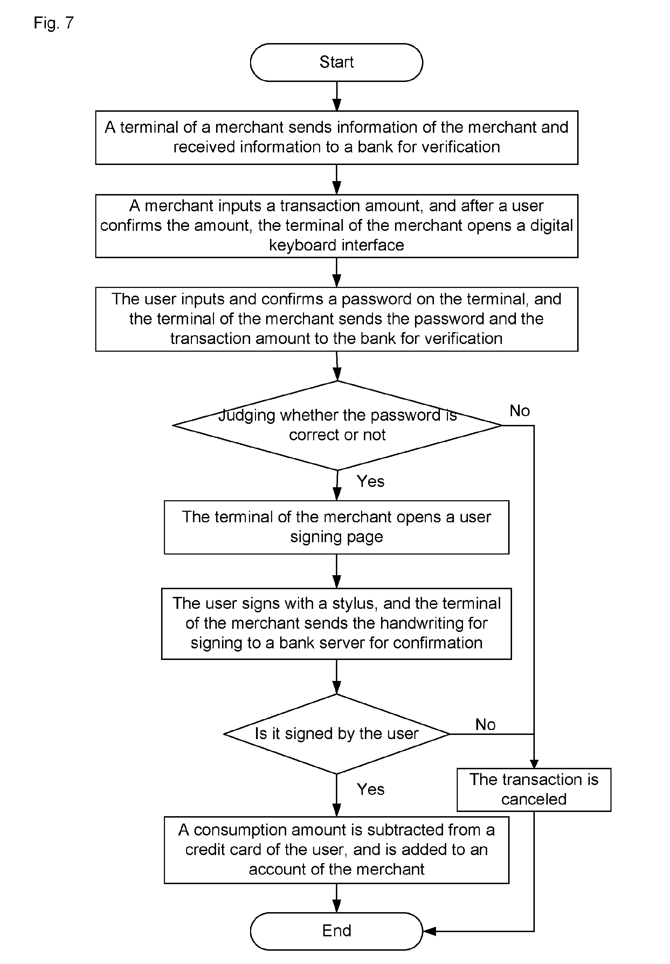

As shown in Fig. 7, a processing process after a terminal of a merchant receives information of a credit card from a stylus includes that that:
first, a terminal of a merchant sends information of the merchant and the received information of the credit card to a bank server (through a wireless network or in another transmission manner) according to a format and a sequence, which the bank server agreed after negotiation, to verify whether the information of the credit card and the information of the merchant are legal or not; if the information of the credit card and the information of the merchant are legal, the following steps are continued; and if the credit card and the information of the merchant are illegal, the process is ended;
then, the terminal of the merchant acquires a transaction amount input by the merchant, a client inputs a password of the credit card after confirmation, and the terminal of the merchant acquires the password, which is input by the client, of the credit card; the terminal of the merchant sends the password of the credit card and the transaction amount to the bank server to verify whether data is legal or not; if the data is legal, the following steps are continued; and if the data is illegal, the process is ended;
then, a screen of the terminal of the merchant displays the information of the merchant, the information of the credit card, a consumption amount and a signature area, and the client signs in the signature area with the stylus; and
then, the terminal of the merchant sends a handwriting of the client to the bank server to verify data is legal or not; if the data is legal, the transaction is finished; and if the data is illegal, the transaction is cancelled.

The above are the preferred embodiments of the disclosure, it should be pointed out that those skilled in the art may make various improvements and polishments to the disclosure without departing from the principle of the disclosure, and these improvements and polishments shall fall within the scope of protection of the disclosures.

## Claims

1. A stylus, comprising a Near Field Communication (NFC) reading module, a sending module and an interface module, wherein
the NFC reading module is configured to acquire information of a smart card using an NFC technology;
the sending module is configured to send the information, which is acquired by the NFC reading module, of the smart card to a terminal of a merchant through the interface module; and
the interface module is configured to perform information transmission with the terminal of the merchant.

2. The stylus according to claim 1, wherein the NFC reading module is configured to acquire the information of the smart card from the smart card using the NFC technology, or to acquire the information of the smart card from a terminal of a user using the NFC technology.

3. The stylus according to claim 1, further comprising:
an input module, which is configured to input a handwritten signature of a user into the terminal of the merchant after receiving a response from the terminal of the merchant.

4. The stylus according to claim 1, wherein the interface module is a Universal Serial Bus (USB) interface module or a Bluetooth module.

5. A mobile terminal, comprising the stylus according to any one of claims 1 to 4.

6. An information processing method, comprising:
acquiring, by a stylus, information of a smart card by virtue of a Near Field Communication (NFC) technology; and
sending, by the stylus, the information of the smart card to a terminal of a merchant.

7. The information processing method according to claim 6, wherein acquiring by the stylus the information of the smart card using the NFC technology comprises:
acquiring, by the stylus, the information of the smart card from the smart card using the NFC technology, or
acquiring, by the stylus, the information of the smart card from a terminal of a user using the NFC technology.

8. The information processing method according to claim 6, after the stylus sends the information of the smart card to the terminal of the merchant, the method further comprising:
inputting, by the stylus, a handwritten signature of a user into the terminal of the merchant after receiving a response from the terminal of the merchant.

9. The information processing method according to claim 8, wherein inputting by the stylus the handwritten signature of the user into the terminal of the merchant comprises:
inputting, by the stylus, the handwritten signature of the user on a touch screen or a tablet of the terminal of the merchant according to operation of the user; or
acquiring, by the stylus, the handwritten signature of the user from a terminal of the user using the NFC technology, and sending the handwritten signature of the user to the terminal of the merchant.

10. The information processing method according to claim 8, after the handwritten signature of the user is input into the terminal of the merchant, the method further comprising:
sending, by the terminal of the merchant, the handwritten signature of the user to a server to enable the server to perform handwriting authentication; and
after the handwriting authentication succeeds, processing respectively, by the server, an account balance of the smart card and an account balance of the merchant, which are stored in the server, according to transaction amount and transaction mode information sent from the terminal of the merchant.
